## Europäisches Patentamt
## European Patent Office
## Office européen des brevets

(19)

(11) Publication number: **0 310 733
B1**

(12)

# EUROPEAN PATENT SPECIFICATION

(45) Date of publication of the patent specification:
05.09.90

(51) Int. Cl.⁵: **F16D 25/14**, F16D 25/12,
B60T 13/58

(21) Application number: **87830354.4**

(22) Date of filing: **07.10.87**

(54) Hydropneumatic actuator for automotive vehicles.

(43) Date of publication of application:
**12.04.89 Bulletin 89/15**

(45) Publication of the grant of the patent:
**05.09.90 Bulletin 90/36**

(84) Designated Contracting States:
**DE FR GB IT SE**

(56) References cited:
**EP-A- 0 004 513
FR-A- 2 136 847
GB-A- 1 127 072
GB-A- 1 390 560**

(73) Proprietor: **BENDIX ITALIA S.p.A., Via Cavalli 53 A
Casella Postale 66, I-26013 Crema(IT)**

(72) Inventor: **Cadeddu, Leonardo, Via Stazione 23,
Crema(IT)**

(74) Representative: **Timoney, Ian Charles Craig et al,
BENDIX FRANCE Division Technique Service Brevets
Bendix Europe 126, rue de Stalingrad,
F-93700 Drancy(FR)**

## Description

The present invention relates to hydropneumatic actuators for automotive vehicles, and, more particularly, to such an actuator for operating the clutch of a vehicle.

An example for such an actuator is given in EP-A 0 004 513 and which is intended for the sychronised hydropneumatic control of the clutch and gearbox of a vehicle. This device has the disadvantage that the output stroke of the actuator rod has to include the clutch opening stroke, the stroke necessary to accomodate the wear of the friction discs, and the various manufacturing tolerances. The actuator was furthermore not adapted to be operated by pneumatic pressure alone. Thus, it was possible, in certain circumstances for the output stroke of the actuator to be longer than the required opening stroke of the clutch and therefore damage to the clutch was possible.

It is known from FR-A 2 136 847 a hydropneumatic actuator for automotive vehicles in which the output stroke is constant and which is adapted to compensate automatically for the wear of the friction discs, but which is not adapted to be operated by pneumatic pressure alone.

It is therefore an object of the invention to provide a hydropneumatic actuator for automotive vehicles, and which is adapted to be operated by pneumatic pressure alone.

According to the invention there is provided a hydropneumatic actuator comprising a body in which is formed a chamber, a first piston slideably mounted in the chamber and selectively displaceable under the effect of a first fluid pressure, a bore formed in the body, a second piston slideably mounted in the bore and selectively displaceable under the effect of a second fluid pressure, the first and second pistons being linked together, an output rod displaceable by movement of the first and second pistons, the actuator further comprising means for allowing relative movement between the output rod and the pistons when the actuator is in its rest position, said means being rendered inoperable when the actuator is operated and comprising an actuator piston slideably mounted in a bore in the second piston and operably connected to the output shaft, said means being rendered inoperable by a hydrostatic link between the actuator piston and the second piston, the hydrostatic link being controlled by a valve which is operable in response to movement of the second piston, said bore being in communication with a source of fluid providing the second fluid pressure by a passage; the passage being closed by the valve member in response to displacement of the pistons from their rest position, characterized in that a chamber is defined in the bore between the second piston and a third piston slideably mounted in the bore, said third piston remaining immobile when the second piston is displaced under the effect of the second fluid pressure while being adapted to follow the second piston, when the first and second pistons are displaced under the effect of the first fluid pressure alone, so that the volume of the chamber remains substantially constant.

One embodiment of the invention will now be described, by way of example, with reference to the accompanying drawings, in which:

- Figure 1 is a longitudinal section through a hydropneumatic actuator, according to the invention, in its rest position ; and
- Figures 2, 3 and 4 are each similar views of the hydropneumatic actuator of Figure 1 in various states of operation.

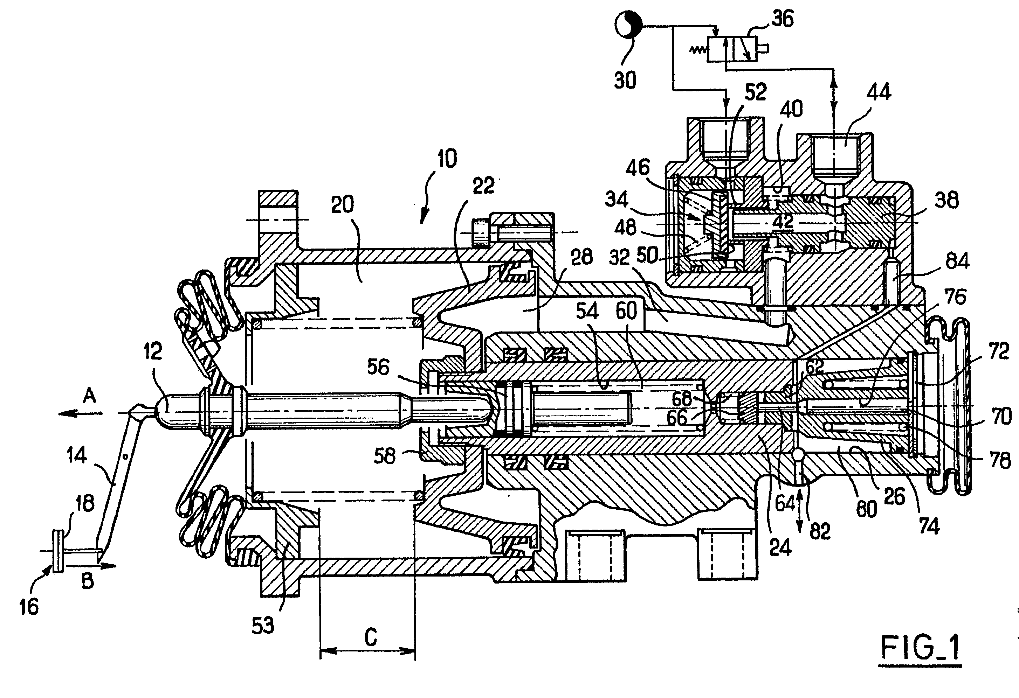

As shown in Figure 1 a hydropneumatic actuator 10 comprises an output rod 12 which is connected, through a lever arm 14, to a clutch 16 of a vehicle. Operation of the actuator 10 causes the output rod 12 to move in the direction of arrow A which results in movement of the friction disc 18 of clutch 16 in the direction of arrow B, thus disengaging the clutch.

The actuator 10 comprises a pneumatic working chamber 20 in which is slideably and sealingly mounted a pneumatic piston 22; The pneumatic piston 22 is fixedly mounted on an end of a piston 24 which is slideably mounted in a bore 26 in the actuator 10. Working chamber is open to the atmosphere while chamber 28, to the right of puston 22 when viewing the drawings, is selectively connectable to a source of high pressure air 30 by way of passage 32 and a valve assembly 34. The valve assembly 34 comprises a valve piston 38 slideably mounted in a stepped bore 40 and has an axial through passage 42 one end of which is in communication with ambient air by way of outlet 44 and solenoid valve 36. The other end of passage 42, in the illustrated rest position, is in communication with passage 32 and thus chamber 28 is open to ambient air. The valve assembly 34 further comprises a valve member 46 urged by a spring 48 against a valve seat 50 on an annular member 52 which is fixedly mounted in stepped bore 40. In its illustrated rest position the valve member 46 closes the passage 32 between the high pressure source 30 and the chamber 28. As will be described below, movement of valve piston 38 to the left, when viewing the drawings, closes the end of passage 42 and lifts valve member 46 from its seat 50 to allow air under pressure to pass from the source 30 to chamber 28 causing the pneumatic piston 22 to be displaced to the left, when viewing the drawings.

In accordance with the invention, the actuator 10 comprises a stop ring 53 fixedly mounted in the working chamber 20 at a distance C from the pneumatic piston 22. Thus, the displacement of the pneumatic piston 22 is limited to the distance C which is predetermined as corresponding to the optimum disengagement distance for the clutch 16 regardless of the state of wear of the friction surfaces.

From Figure 1 it will be seen that, in order to accommodate wear of the clutch friction surfaces, the output rod 12 must move progressively to the right, when viewing the drawings. In accordance with the invention the actuator comprises a slack adjustment device associated with piston 24. An axial, stepped bore 54 is formed in piston 24 in which is slideably and sealingly mounted an actuator piston 56 which is urged to the left towards an annular stop 58 by a spring 60. In the end of stepped bore 54 remote from the output rod 12 is mounted an annular valve seat 62 in which is slideably mounted the stem 64 of a valve member 66 which is urged into a closed position on the valve seat 62 by a spring 68. In the illustrated rest position the valve member 66 is lifted from its seat 62 by a pin 70 fixedly mounted in a closure member 72 located at the end of bore 26 and which cooperates with stem 64. A generally conical piston 74 is slideably mounted in the bore 26 and has a longitudinal passage 76 through which passes pin 70. Piston 74 is urged to the left by a spring 78 which bears against closure member 72. The end of bore 26 in which is mounted piston 74 forms a hydraulic working chamber 80 which communicates with a source of hydraulic fluid, for example a master-cylinder (not shown) by way of inlet 82. Working chamber 80 communicates, by way of a passage 84, with a chamber formed in bore 40 and limited by piston 38. In the rest position the working chamber 80 is also in communication with the bore 54 in piston 24 as the valve member 66 is in its open position.

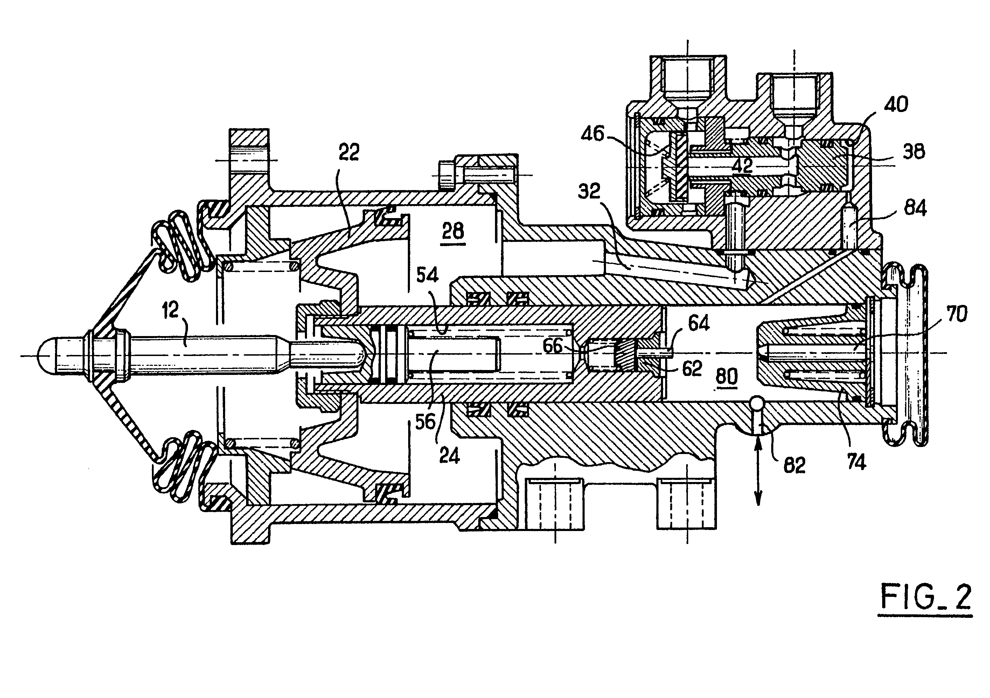

Hydropneumatic operation of the actuator which has been described above is as follows. Actuation of the master-cylinder sends fluid under pressure through inlet 82 into chamber 80 which causes piston 24 to move to the left, when viewing the drawings, and valve member 66 to close on its seat 62 as the stem 64 is no longer in contact with pin 70. The hydraulic fluid trapped in bore 54 in the piston 24 forms a hydrostatic link between piston 24 and actuator piston 56 which are therefore displaced together. Simultaneously upon operation of the actuator, fluid under pressure passes form chamber 80 through passage 84 to the chamber formed in bore 40 causing valve piston 38 to move to the left. Such a movement of valve piston 38 closes passage 42 and opens the passage 32 between the source of high pressure air 30 and chamber 28 by movement of the valve member 46. Thus, the output rod 12 is displaced by a combination of hydraulic pressure acting on piston 24 and pneumatic pressure acting on piston 22. Piston 74 remains in its rest position as the pressure in chamber 80 overcomes the force of spring 78. This position of the actuator is shown in Figure 2. When the friction discs of the clutch are new, release of the master-cylinder causes all parts of the actuator to return to their rest position shown in Figure 1.

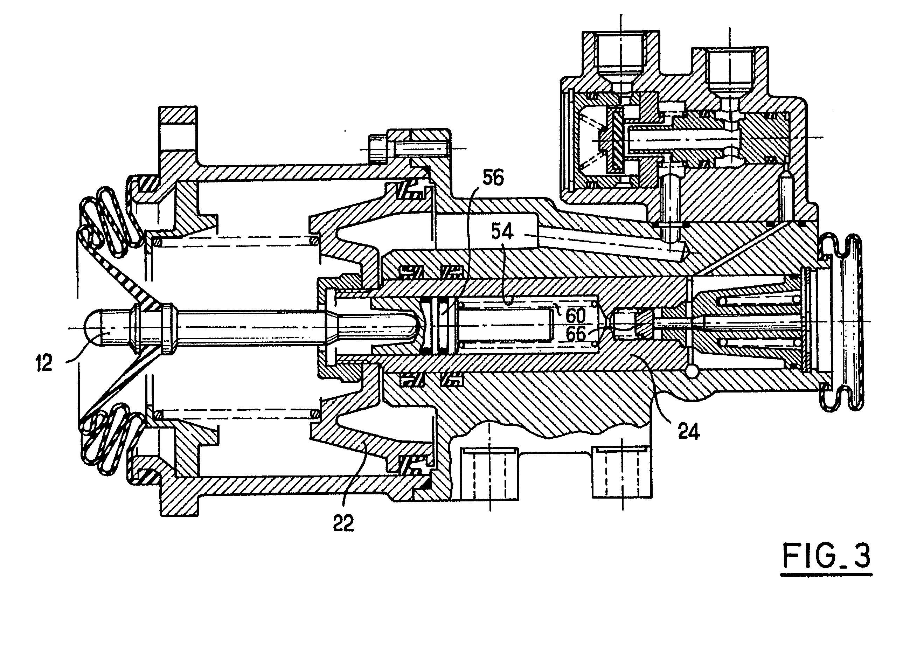

As the friction discs of the clutch start to wear the actuator rod 12 must move progressively to the right in order that it is may move, upon actuation, through the required distance C. Thus, in accordance with the invention, each time the actuator returns to its rest position and valve member 66 opens to release the hydrostatic link between actuator piston 56 and piston 24, the actuator piston 56 and the output rod 12 are moved incrementally against the force of the spring 60. On a subsequent operation of the actuator the actuator piston 56 is effectively locked in its new position in the bore 54 by the closure of valve member 66. In this way the actuator compensates automatically for wear of the friction discs while always ensuring that the output shaft is moved through the optimum distance C. The position of the output rod 12 and the actuator piston 56 when the friction discs are worn is shown in Figure 3.

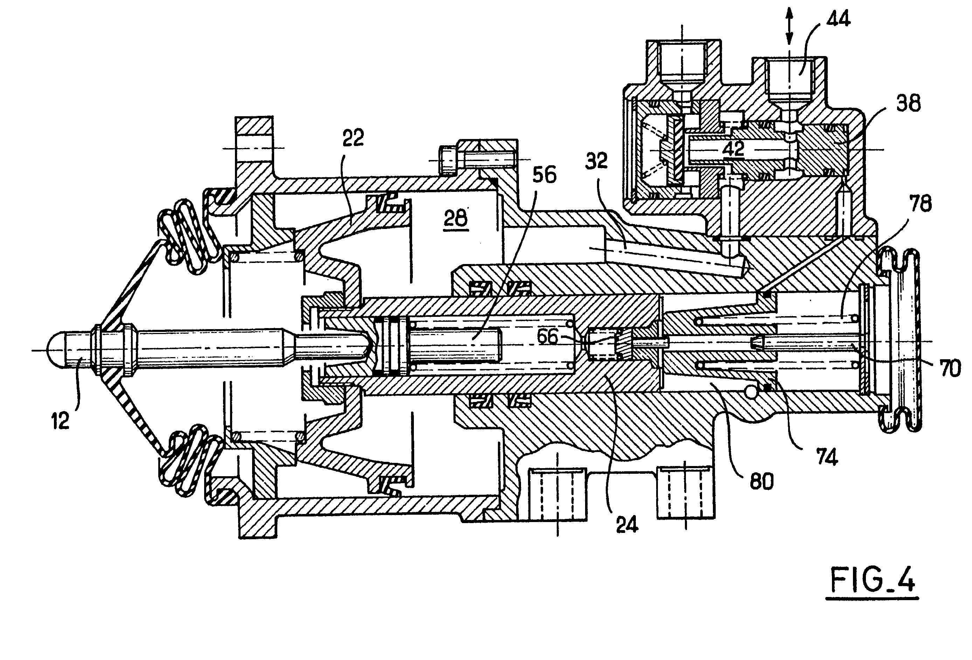

The present actuator may also be operated by pneumatic pressure alone, as will now be described with reference to Figure 4. When it is desired to operate the actuator the solenoid valve 36 is actuated so as to send air under pressure from the source 30 (Figure 1) to the inlet 44. From the inlet 44 the air passes through passage 42 in valve piston 38 and thence, by way of passage 32 to chamber 28 where it causes the pneumatic piston 22 to be displaced to the left.

As the displacement of the pneumatic piston 22 entails a corresponding movement of the piston 24 it is necessary to allow for volume compensation in the fluid in working chamber 80. In order to avoid fluid being drawn from the master-cylinder in response to the decrease in pressure in the working chamber 80, the conical piston 74 moves to the left together with piston 24 and thus the volume of the chamber 80 between the two pistons 24 and 74 remains constant. As pin 70 is fixed, movement of the conical piston 74 does not stop valve member 66 from closing. When it is desired to re-engage the clutch, solenoid valve 36 is returned to its rest position and the compressed air inside the actuator is allowed to exit and the various components return to their rest positions.

Thus, in accordance with the invention, the actuator may be selectively operated either by the master-cylinder -in which case hydropneumatic operation occurs- or by operation of the solenoid valve, for example by simply pushing a button, in which case pneumatic operation alone occurs.

**Claims**

1. A hydropneumatic actuator comprising a body (10) in which is formed a chamber (20), a first piston (22) slideably mounted in the chamber (20) and selectively displaceable under the effect of a first fluid pressure, a bore (26) slideably mounted in the bore (26) and selectively displaceable under the effect of a second fluid pressure, the first and second pistons (22, 24) being linked together, an output rod (12) displaceable by movement of the first and second pistons, the actuator further comprising means (56; 66) for allowing relative movement between the output rod (12) and the pistons (22, 24) when the actuator is in its rest position, said means (56; 66) being rendered inoperable when the actuator is operated and comprising an actuator piston (56) slideably mounted in a bore (54) in the second piston (24) and operably connected to the output shaft (12), said means (56; 66) being rendered inoperable by a hydrostatic link between the actuator piston (56) and the second piston (24), the hydrostatic link being controlled by a valve (66) which is operable in response to movement of the second piston (24), said bore (54) being in communication with a source of fluid providing the second fluid pressure, by a passage (62); the passage being closed by the valve member (66) in response to displacement of the pistons (22, 24) from their rest position, characterized in that a chamber (80) is defined in the bore (26) between the second piston (24) and a third piston (74) slideably mounted in the bore (26), said third piston (74) remaining immobile when the second piston (24) is displaced under the effect of the second fluid pressure while being adapted to follow the second piston (24), when the first and second pistons (22, 24) are displaced under the effect of the first fluid pressure alone, so that the volume of the chamber (80) remains substantially constant.

2. Actuator as claimed in claim 1 characterised in that it further comprises valve means (36) selectively operable to displace the pistons (22, 24) under the effect of the first fluid pressure.

## Patentansprüche

1. Hydropneumatischer Betätiger mit einem Gehäuse (10), in dem eine Kammer (20) gebildet ist, einem ersten Kolben (22), der in der Kammer (20) gleitbar gelagert und unter der Wirkung eines ersten Strömungsmitteldrucks wahlweise verschiebbar ist, einer Bohrung (26), die in dem Gehäuse (10) gebildet ist, einem zweiten Kolben (24), der in der Bohrung (26) gleitbar gelagert und unter der Wirkung eines zweiten Strömungsmitteldrucks wahlweise verschiebbar ist, wobei der erste und zweite Kolben (22, 24) miteinander gekoppelt sind, einer Ausgangsstange (12), die durch eine Bewegung des ersten und zweiten Kolbens verschiebbar ist, wobei der Betätiger ferner Mittel (56, 66) aufweist, die eine Relativbewegung zwischen der Ausgangsstange (12) und den Kolben (22, 24) ermöglichen, wenn sich der Betätiger in seiner Ruhestellung befindet, wobei die besagten Mittel (56; 66) unwirksam gemacht werden, wenn der Betätiger betätigt wird, und einen Betätigerkolben (56) aufweisen, der in einer Bohrung (54) des zweiten Kolbens (24) gleitbar gelagert und mit der Ausgangsstange (12) funktionsmäßig verbunden ist, wobei die besagten Mittel (56; 66) durch eine hydrostatische Koppelung zwischen dem Betätigerkolben (56) und dem zweiten Kolben (24) unwirksam gemacht werden und die hydrostatische Koppelung durch ein Ventil (66) gesteuert wird, das in Abhängigkeit von einer Bewegung des zweiten Kolbens (24) betätigt wird, wobei die Bohrung (54) in Strömungsverbindung mit einer den zweiten Strömungsmitteldruck liefernden Strömungsmittelquelle steht, und zwar über einen Kanal (62), der von dem Ventilglied (66) bei einer Verschiebung der Kolben (22, 24) aus ihrer Ruhestellung geschlossen wird, dadurch gekennzeichnet, daß eine Kammer (80) in der Bohrung (26) zwischen dem zweiten Kolben (24) und einem in der Bohrung (26) gleitbar gelagerten dritten Kolben (74) gebildet ist, wobei der dritte Kolben (74) stehenbleibt, wenn der zweite Kolben (24) unter der Wirkung des zweiten Strömungsmitteldrucks verschoben wird, wogegen er dem zweiten Kolben (24) folgt, wenn der erste und zweite Kolben (22, 24) unter der Wirkung des ersten Strömungsmitteldrucks allein verschoben wird, so daß das Volumen der Kammer (80) im wesentlichen konstant bleibt.

2. Betätiger nach Anspruch 1, dadurch gekennzeichnet, daß er Ventilmittel (36) aufweist, die wahlweise betätigbar sind, um die Kolben (22, 24) unter der Wirkung des ersten Strömungsmitteldrucks zu verschieben.

## Revendications

1. Dispositif de commande hydropneumatique comprenant un boîtier (10) incluant une chambre (20), un premier piston (22) monté coulissant dans la chambre (20) et pouvant être mis en mouvement sélectivement sous l'effet de la pression d'un premier fluide, un alésage (26) prévu dans le boîtier (10) un deuxième piston (24) monté coulissant dans l'alésage (26) et mobile sélectivement sous l'effet d'une seconde pression de fluide, les premier et deuxième pistons (22, 24) étant reliés ensemble, une tige de sortie (12) mobile sous l'action des premier et deuxième pistons, le dit dispositif de commande comprenant en outre des moyens (56; 66) autorisant le mouvement relatif entre la tige de sortie (12) et les pistons (22, 24) lorsque le dispositif de commande est en position de repos, les dits moyens (56; 66) étant rendus inopérants lorsque le dispositif de commande fonctionne et comprenant un piston de commande (56) monté coulissant dans le deuxième piston (24) et relié à l'arbre de sortie (12), les dits moyens (56, 66) étant mis hors de fonctionnement par une liaison hydrostatique entre le piston de commande (56) et le deuxième piston (24) la liaison hydrostatique étant commandée par une valve (66) mise en action par le mouvement du deuxième piston (24) dans un alésage (54), le dit alésage (54) étant en communication avec une source de fluide assurant la pression du second fluide au moyen d'un passage (62); le dit passage étant obturé par l'élément de valve (66) du fait du mouvement des pistons (22, 24) hors de leur position de repos, caractérisé en ce qu'une chambre (80) est située dans l'alésage (26) entre le deuxième piston (24) et un troisième piston (74) monté coulissant dans l'alésage (26), ce troisième piston (74) restant immobile lorsque le deuxième piston (24) est mis en mouvement sous l'effet de la pression du second fluide tout en étant adapté pour suivre le deuxième piston (24) lorsque les premier et deuxième pistons (22, 24) sont déplacés sous l'effet de la pression du seul premier fluide, de telle sorte que le volume de la chambre (80) reste pratiquement constant.

2. Dispositif de commande selon la revendication 1, caractérisé en ce qu'il comprend en outre une valve (36) agissant sélectivement pour déplacer les pistons (22, 24) sous l'effet de la pression du premier fluide.

FIG_1

EP 0 310 733 B1

FIG_2

EP 0 310 733 B1

FIG_3

12 22 24 54 56 60 66

FIG_4